(19) **Europäisches Patentamt / European Patent Office / Office européen des brevets**

(11) **EP 4 223 511 A1**

(12) # EUROPEAN PATENT APPLICATION
published in accordance with Art. 153(4) EPC

(43) Date of publication:
**09.08.2023 Bulletin 2023/32**

(21) Application number: **21875519.7**

(22) Date of filing: **27.09.2021**

(51) International Patent Classification (IPC):
*B32B 25/14* (2006.01)    *C08K 5/17* (2006.01)
*C08K 5/205* (2006.01)    *C08K 5/31* (2006.01)
*C08K 5/3442* (2006.01)    *C08K 5/40* (2006.01)
*C08K 5/43* (2006.01)    *C08L 33/04* (2006.01)
*F16L 11/04* (2006.01)

(52) Cooperative Patent Classification (CPC):
**B32B 25/14; C08K 5/17; C08K 5/205; C08K 5/31;
C08K 5/3442; C08K 5/40; C08K 5/43; C08L 33/04;
F16L 11/04**

(86) International application number:
**PCT/JP2021/035350**

(87) International publication number:
**WO 2022/071217 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020 JP 2020166459**

(71) Applicant: **Osaka Soda Co., Ltd.
Osaka-shi
Osaka 550-0011 (JP)**

(72) Inventors:
• **ASAI, Hisashi**
 **Osaka-shi, Osaka 550-0011 (JP)**
• **MOROOKA, Yoshihiro**
 **Osaka-shi, Osaka 550-0011 (JP)**
• **KITAGAWA, Motoki**
 **Osaka-shi, Osaka 550-0011 (JP)**

(74) Representative: **Vossius & Partner
Patentanwälte Rechtsanwälte mbB
Siebertstraße 3
81675 München (DE)**

(54) **CARBOXYL GROUP-CONTAINING ACRYLIC RUBBER COMPOSITION AND MULTILAYER BODY**

(57) The present invention aims to provide a laminate of a carboxyl group-containing acrylic rubber composition and a fluororubber composition which has sufficient adhesion by allowing the carboxyl group-containing acrylic rubber composition and the fluororubber composition to be thermally crosslinked and adhered to each other. The present invention relates to a carboxyl group-containing acrylic rubber composition containing (A) a carboxyl group-containing acrylic rubber, (B) a thiuram compound and/or N-S bond-containing compound, (C) a tertiary amine and/or guanidine compound, and (D) an aliphatic diamine compound and/or aromatic diamine compound, wherein the composition has a scorch time t5 at 125°C of 60 minutes or less.

EP 4 223 511 A1

**Description**

TECHNICAL FIELD

The present invention relates to an acrylic rubber and relates to a carboxyl group-containing acrylic rubber composition and a laminate thereof, in which the composition is also excellent in various properties such as normal-state physical properties, heat resistance, and oil resistance and, further, is capable of being directly crosslinked and adhered to a fluororubber without using an adhesive layer.

BACKGROUND ART

Recent automobile exhaust gas regulations are very strict, and fuel hoses for use in applications such as automobiles are also being developed which combine heat aging resistance, weather resistance, resistance to rancid gasoline, resistance to alcohol-containing gasoline, gasoline impermeability, etc. Moreover, as part of efforts to reduce the burden on the environment, the demand for diesel engines has been increasing, especially in Europe, and even higher resistance to heat aging, etc., has been required due to the characteristics of turbochargers for diesel engines. One of such fuel hose materials is fluorine-containing rubbers. While fluorine-containing rubbers have high performance with respect to the requirements described above, they are expensive and have a cold resistance problem. Hence, laminates are being developed which include a thin layer of fluorine-containing rubber as an inner layer and another type of rubber as an outer layer.

Generally, for a laminate of a fluororubber and another type of rubber as described above, the adhesion between the rubbers is very important, but fluororubbers are known to have poor adhesion to other types of rubbers. There are three ways of crosslinking fluororubbers: diamine crosslinking; polyol crosslinking; and peroxide crosslinking. Peroxide-crosslinked fluororubbers show excellent performance in terms of chemical resistance, steam resistance, compression set, etc (Non-Patent Literature 1).

Patent Literature 1 discloses a laminate of a peroxide-crosslinkable fluororubber and an acrylic rubber in which the adhesion to the peroxide-crosslinkable fluororubber can be improved by the acrylic rubber obtained by incorporating 1,4-diazabicyclo[2.2.2]octane, a crosslinking agent for a carboxyl group-containing acrylic rubber, and a guanidine-based, thiuram-based, or thiourea-based crosslinking accelerator into a carboxyl group-containing acrylic rubber.

The peroxide-crosslinkable fluororubber used in Patent Literature 1 contains magnesium oxide as a filler. The incorporation of such a metal oxide provides effects such as good adhesion and bonding to a laminate between fluororubbers, between a fluororubber and another type of rubber, or between a fluororubber and a metal. Moreover, it is also effective as an acid acceptor when used in another crosslinking system.

However, the filler may cause a deterioration in normal-state physical properties due to its poor dispersion during roll processing, and the filler may reduce oil resistance and chemical resistance as the filler component may dissolve in an oil component such as gasoline, causing cracking.

CITATION LIST

PATENT LITERATURE

Patent Literature 1: WO 2018/110701

NON PATENT LITERATURE

Non-Patent Literature 1: Katsusada Tokuhira, "Formulation of Fluoroelastomer", Journal of The Society of Rubber Industry, Japan, 2000, Vol. 73, No. 6, pp. 298-306

SUMMARY OF INVENTION

TECHNICAL PROBLEM

The present invention aims to provide a laminate of a carboxyl group-containing acrylic rubber composition and a fluororubber composition which has sufficient adhesion by allowing the carboxyl group-containing acrylic rubber composition and the fluororubber composition to be thermally crosslinked and adhered to each other.

SOLUTION TO PROBLEM

Embodiments of the present invention are as follows.

Embodiment 1. A carboxyl group-containing acrylic rubber composition, containing: (A) at least one carboxyl group-containing acrylic rubber; (B) at least one thiuram compound and/or N-S bond-containing compound; (C) at least one tertiary amine and/or guanidine compound; and (D) at least one aliphatic diamine compound and/or aromatic diamine compound,

wherein the composition has a scorch time t5 at 125°C of 60 minutes or less.

Embodiment 2. The carboxyl group-containing acrylic rubber composition according to Embodiment 1, wherein the N-S bond-containing compound (B) is 4,4'-dithiodimorpholine.

Embodiment 3. The carboxyl group-containing acrylic rubber composition according to Embodiment 1 or 2, wherein an amount of the component (B) is 0.1 to 10 parts by mass per 100 parts by mass of the component (A).

Embodiment 4. The carboxyl group-containing acrylic rubber composition according to any one of Embodiments 1 to 3, wherein the tertiary amine and/or guanidine compound (C) is at least one selected from the group consisting of 1,8-diazabicyclo(5.4.0)undecene-7 and salts thereof and 1,3-di-o-tolylguanidine.

Embodiment 5. The carboxyl group-containing acrylic rubber composition according to any one of Embodiments 1 to 4, wherein an amount of the component (C) is 0.1 to 10 parts by mass per 100 parts by mass of the component (A).

Embodiment 6. The carboxyl group-containing acrylic rubber composition according to any one of Embodiments 1 to 5, wherein the aliphatic diamine compound and/or aromatic diamine compound (D) is hexamethylenediamine carbamate and/or 2,2-bis[4-(4-aminophenoxy)phenyl]propane.

Embodiment 7. The carboxyl group-containing acrylic rubber composition according to any one of Embodiments 1 to 6, wherein an amount of the component (D) is 0.1 to 6 parts by mass per 100 parts by mass of the component (A).

Embodiment 8. A laminate, including a crosslinked product of the carboxyl group-containing acrylic rubber composition as defined in any one of Embodiments 1 to 7 and a crosslinked product of a fluororubber composition which are laminated together.

Embodiment 9. A tube or hose, including the laminate as defined in Embodiment 8.

Embodiment 10. A fuel piping or air piping product, including the tube or hose as defined in Embodiment 9.

ADVANTAGEOUS EFFECTS OF INVENTION

The present invention can provide a carboxyl group-containing acrylic rubber composition and a laminate thereof, in which the composition is also excellent in various properties such as normal-state physical properties, heat resistance, and oil resistance and, further, is capable of being directly crosslinked and adhered to a fluororubber composition without using an adhesive layer.

DESCRIPTION OF EMBODIMENTS

The carboxyl group-containing acrylic rubber composition of the present invention at least contains: (A) a carboxyl group-containing acrylic rubber; (B) a thiuram compound and/or N-S bond-containing compound; (C) a tertiary amine and/or guanidine compound; and (D) an aliphatic diamine compound and/or aromatic diamine compound, and has a scorch time t5 at 125°C of 60 minutes or less. Since the carboxyl group-containing acrylic rubber composition of the present invention contains the components (A), (B), (C), and (D) and has a scorch time t5 at 125°C of 60 minutes or less, the carboxyl group-containing acrylic rubber composition provides an advantageous effect in that it is excellent in processability such as roll processability and in various properties such as normal-state physical properties, heat resistance, and oil resistance, and also has excellent adhesion to a fluororubber composition.

The reason why the carboxyl group-containing acrylic rubber composition provides the above-described advantageous effect is not exactly clear, but it is believed to be as follows.

The tertiary amine and/or guanidine compound (C) is a component that acts as a crosslinking accelerator for the carboxyl group-containing acrylic rubber (A) in the carboxyl group-containing acrylic rubber composition of the present invention. The aliphatic diamine compound and/or aromatic diamine compound (D) is a component that acts as a crosslinking agent for the carboxyl group-containing acrylic rubber (A) in the carboxyl group-containing acrylic rubber composition of the present invention as it can easily form a crosslinked structure with a carboxyl group.

Moreover, the thiuram compound and/or N-S bond-containing compound (B) is a component that acts as an adhesive to a fluororubber composition. The reason why it improves the adhesion is not exactly clear, but the adhesion is believed to be improved as follows: the heat upon crosslinking of the carboxyl group-containing acrylic rubber composition of the present invention may decompose the thiuram compound and/or N-S bond-containing compound (B) to form an NH group which may then act on the fluorine on the interface with the fluororubber composition to abstract an HF group. As a result, the fluororubber composition may become more likely to react with the acrylic rubber composition.

Moreover, the concurrent use of the specific components (A), (C), and (D) may result in a carboxyl group-containing acrylic rubber composition having an appropriate crosslink density. Moreover, when such a carboxyl group-containing acrylic rubber composition further contains the component (B) that acts as an adhesive, it is excellent in processability such as roll processability and in various properties such as normal-state physical properties, heat resistance, and oil resistance, and has strong adhesion to a fluororubber.

Further, such a carboxyl group-containing acrylic rubber composition has a scorch time t5 at 125°C of 60 minutes or less and thus is highly reactive and more likely to react with a fluororubber composition. For this reason, it is believed that the above-described advantageous effect can be more significant.

The carboxyl group-containing acrylic rubber (A) used in the present invention may be, for example, an acrylic rubber that contains: 10 to 98.9% by mass of (A-1) a structural unit derived from a (meth)acrylate containing a C1-C3 alkyl group or a C2-C3 alkoxyalkyl group; 0 to 88.9% by mass of (A-2) a structural unit derived from a (meth)acrylate containing a C4-C8 alkyl group or a C4-C8 alkoxyalkyl group; and 0.1 to 5% by mass of (A-3) a structural unit derived from an ethylenically unsaturated carboxylic acid. A single carboxyl group-containing acrylic rubber (A) may be used alone, or two or more carboxyl group-containing acrylic rubbers (A) may be used in combination. Here, the term "(meth)acrylate" refers to "acrylic acid ester or methacrylic acid ester". The same applies to similar expressions used in the present application.

Specific examples of the (meth)acrylate containing a C1-C3 alkyl group or a C2-C3 alkoxyalkyl group (A-1) include methyl (meth)acrylate, ethyl (meth)acrylate, n-propyl (meth)acrylate, isopropyl (meth)acrylate, methoxymethyl (meth)acrylate, methoxyethyl (meth)acrylate, and ethoxymethyl (meth)acrylate. These may be used alone or in admixtures of two or more. Among these, ethyl (meth)acrylate or methoxyethyl (meth)acrylate is particularly preferred.

The structural unit (A-1) content of the carboxyl group-containing acrylic rubber (A) may be 10 to 98.9% by mass, preferably 15 to 98% by mass, more preferably 20 to 97.5% by mass of the total structural units. If the structural unit (A-1) content is too low, the acrylic rubber, especially when prepared into a crosslinkable rubber composition, may have high tackiness, reducing roll processability. On the other hand, too high a content may result in a decrease in cold resistance.

Specific examples of the (meth)acrylate containing a C4-C8 alkyl group or a C4-C8 alkoxyalkyl group (A-2) include n-butyl (meth)acrylate, isobutyl (meth)acrylate, n-pentyl (meth)acrylate, n-hexyl (meth)acrylate, n-heptyl (meth)acrylate, n-octyl (meth)acrylate, 2-ethylhexyl (meth)acrylate, cyclohexyl (meth)acrylate, 2-ethoxyethyl (meth)acrylate, 2-propoxyethyl (meth)acrylate, 2-butoxyethyl (meth)acrylate, 2-methoxypropyl (meth)acrylate, 2-ethoxypropyl (meth)acrylate, 3-methoxypropyl (meth)acrylate, 3-ethoxypropyl (meth)acrylate, 4-methoxybutyl (meth)acrylate, and 4-ethoxybutyl (meth)acrylate. These may be used alone or in admixtures of two or more. Among these, n-butyl (meth)acrylate or 2-ethoxyethyl (meth)acrylate is particularly preferred.

The structural unit (A-2) content of the carboxyl group-containing acrylic rubber (A) may be 0 to 88.9% by mass, preferably 0 to 75% by mass, more preferably 0 to 65% by mass of the total structural units. Too high a structural unit (A-2) content may result in a decrease in roll processability.

Examples of the ethylenically unsaturated carboxylic acid (A-3) include C3-C12 ethylenically unsaturated monocarboxylic acids, C4-C12 ethylenically unsaturated dicarboxylic acids, and monoalkyl esters of C4-C12 ethylenically unsaturated dicarboxylic acids and C1-C8 alkanols (such monoalkyl esters may be referred to as "ethylenically unsaturated dicarboxylic acid monoesters").

Specific examples of the C3-C12 ethylenically unsaturated monocarboxylic acids include acrylic acid, methacrylic acid, $\alpha$-ethylacrylic acid, crotonic acid, and cinnamic acid.

Specific examples of the C4-C12 ethylenically unsaturated dicarboxylic acids include fumaric acid, maleic acid, citraconic acid, mesaconic acid, itaconic acid, 2-pentenedioic acid, acetylenedicarboxylic acid, and anhydrides thereof.

Specific examples of the C4-C12 ethylenically unsaturated dicarboxylic acid monoesters include monomethyl fumarate, monoethyl fumarate, monopropyl fumarate, mono-n-butyl fumarate, monoisobutyl fumarate, monocyclohexyl fumarate, monomethyl maleate, monoethyl maleate, monopropyl maleate, mono-n-butyl maleate, monomethyl citraconate, monoethyl citraconate, monopropyl citraconate, mono-n-butyl citraconate, monomethyl mesaconate, monoethyl mesaconate, monopropyl mesaconate, mono-n-butyl mesaconate, monomethyl itaconate, monoethyl itaconate, mono-n-butyl itaconate, monocyclohexyl itaconate, monomethyl 2-pentenedioate, monoethyl 2-pentenedioate, monopropyl 2-pentenedioate, mono-n-butyl 2-pentenedioate, monomethyl acetylenedicarboxylate, monoethyl acetylenedicarboxylate, monopropyl acetylenedicarboxylate, mono-n-butyl acetylenedicarboxylate, and monocyclohexyl acetylenedicarboxylate.

These ethylenically unsaturated carboxylic acids (A-3) may be used alone or in admixtures of two or more. Among these, monoethyl fumarate, monopropyl fumarate, mono-n-butyl fumarate, monoisobutyl fumarate, monomethyl itaconate, and mono-n-butyl itaconate are preferred.

The structural unit (A-3) content of the carboxyl group-containing acrylic rubber (A) may be 0.1 to 5% by mass, preferably 0.2 to 4% by mass, more preferably 0.5 to 3% by mass of the total structural units. If the structural unit (A-3) content is too low, the structural unit (A-3) may produce an insufficient effect, so that the resulting crosslinked rubber product may have an insufficient crosslink density and fail to provide good crosslinking properties. On the other hand, too high a content may result in a crosslinked rubber product having lower elongation.

In addition to the structural units (A-1) to (A-3) derived from the (meth)acrylates or ethylenically unsaturated carboxylic acid described above, the carboxyl group-containing acrylic rubber (A) may contain structural units derived from additional copolymerizable monomers as long as it maintains acrylic rubber characteristics.

Examples of the additional copolymerizable monomers include but not limited to aromatic vinyl monomers, ethylenically unsaturated nitrile monomers, conjugated diene monomers, olefin monomers, and vinyl ether compounds.

Specific examples of the aromatic vinyl monomers include styrene, $\alpha$-methylstyrene, o-methylstyrene, p-methylstyrene, o-ethylstyrene, p-ethylstyrene, $\alpha$-fluorostyrene, p-trifluoromethylstyrene, p-methoxystyrene, p-aminostyrene, p-dimethylaminostyrene, p-acetoxystyrene, styrenesulfonic acid or salts thereof, $\alpha$-vinylnaphthalene, 1-vinylnaphthalene-4-sulfonic acid or salts thereof, 2-vinylfluorene, 2-vinylpyridine, 4-vinylpyridine, divinylbenzene, diisopropenylbenzene, and vinylbenzyl chloride.

Specific examples of the ethylenically unsaturated nitrile monomers include acrylonitrile, methacrylonitrile, $\alpha$-methoxyacrylonitrile, and vinylidene cyanide.

Specific examples of the conjugated diene monomers include 1,3-butadiene, 2-methyl-1,3-butadiene, 2-chloro-1,3-butadiene(chloroprene), 1,2-dichloro-1,3-butadiene, 2,3-dichloro-1,3-butadiene, 2,3-dimethyl-1,3-butadiene, 2-neopentyl-1,3-butadiene, 2-bromo-1,3-butadiene, 2-cyano-1,3-butadiene, 1,3-pentadiene (piperylene), and 1,3-hexadiene.

Specific examples of the olefin monomers include ethylene, propylene, vinyl chloride, vinylidene chloride, 1,2-dichloroethylene, vinyl acetate, vinyl fluoride, vinylidene fluoride, 1,2-difluoroethylene, vinyl bromide, vinylidene bromide, and 1,2-dibromoethylene.

Specific examples of the vinyl ether compounds include ethyl vinyl ether, dimethylaminoethyl vinyl ether, and n-butyl vinyl ether.

Other examples include non-conjugated dienes such as 1,4-pentadiene, 1,4-hxadiene, ethylidene norbornene, norbornadiene, and dicyclopentadiene; and esters such as dicyclopentadienyl acrylate, dicyclopentadienyl methacrylate, dicyclopentadienylethyl acrylate, dicyclopentadienylethyl methacrylate, and vinyl acetate.

The additional copolymerizable monomers may be used alone or in combinations of two or more. The content of the structural units derived from additional copolymerizable monomers in the carboxyl group-containing acrylic rubber (A) may be 0 to 45% by mass, preferably 0 to 20% by mass of the total structural units.

The carboxyl group-containing acrylic rubber (A) used in the present invention can be produced by copolymerizing the above monomers. The mode of the polymerization reaction may be emulsion polymerization, suspension polymerization, bulk polymerization, or solution polymerization, but from standpoints such as easiness in controlling the polymerization reaction, emulsion polymerization under normal pressure is preferred which is generally used in conventionally known acrylic rubber production.

The emulsion polymerization may be performed batchwise, semi-batchwise, or continuously. The polymerization temperature is usually 0 to 70°C, preferably 5 to 50°C.

The glass transition temperature (Tg) of the thus-produced carboxyl group-containing acrylic rubber (A) to be used in the present invention is preferably -70°C to -5°C, more preferably -60°C to -10°C, still more preferably -50° to -20°C. Moreover, the Mooney viscosity (ML1+4, 100°C) (polymer Mooney) of the carboxyl group-containing acrylic rubber (A) is preferably 10 to 80, more preferably 20 to 70, still more preferably 25 to 60. Herein, the glass transition temperature (Tg) of the carboxyl group-containing acrylic rubber (A) can be determined according to JIS K 6240, and the Mooney viscosity (ML1+4, 100°C) thereof can be determined according to JIS K 6300.

The carboxyl group-containing acrylic rubber composition of the present invention at least contains (B) a thiuram compound and/or N-S bond-containing compound, (C) a tertiary amine and/or guanidine compound, and (D) an aliphatic diamine compound and/or aromatic diamine compound, in addition to the carboxyl group-containing acrylic rubber (A).

The thiuram compound and/or N-S bond-containing compound (B) is a component that acts as an adhesive to a fluororubber composition. The reason why it improves the adhesion is not exactly clear, but the adhesion is believed to be improved as follows: the heat upon crosslinking of the carboxyl group-containing acrylic rubber composition of the present invention may decompose the thiuram compound and/or N-S bond-containing compound (B) to form an NH group which may then act on the fluorine on the interface with the fluororubber composition to abstract an HF group.

Specific examples of the thiuram compound (B) used in the present invention include tetramethylthiuram monosulfide, tetramethylthiuram disulfide, tetraethylthiuram disulfide, tetra-n-butylthiuram disulfide, and dipentamethylenethiuram tetrasulfide. Among these, tetramethylthiuram disulfide, tetraethylthiuram disulfide, and dipentamethylenethiuram tetrasulfide are preferred in terms of adhesion to a fluororubber composition. More preferred is dipentamethylenethiuram tetrasulfide.

Specific examples of the N-S bond-containing compound (B) used in the present invention include N-cyclohexyl-2-benzothiazole sulfenamide, N-(tert-butyl)-2-benzothiazole sulfenamide, 2-morpholinothiobenzothiazole, 2-morpholinodithiobenzothiazole, and 4,4'-dithiodimorpholine. Among these, 4,4'-dithiodimorpholine is preferred in terms of adhesion to a fluororubber composition.

The thiuram compound and/or N-S bond-containing compound (B) is preferably at least one selected from the group consisting of tetramethylthiuram disulfide, tetraethylthiuram disulfide, dipentamethylenethiuram tetrasulfide, and 4,4'-dithiodimorpholine, more preferably dipentamethylenethiuram tetrasulfide.

In the present invention, the thiuram compound and/or N-S bond-containing compound (B) which also corresponds to (C) a tertiary amine and/or guanidine compound or (D) an aliphatic diamine compound and/or aromatic diamine compound as described later is regarded as the component (B).

A single thiuram compound and/or N-S bond-containing compound (B) may be used alone, or two or more thiuram compounds and/or N-S bond-containing compounds (B) may be used in combination. The amount of thiuram compounds and/or N-S bond-containing compounds (B) is preferably 0.1 to 10 parts by mass, more preferably 0.15 to 8 parts by mass, still more preferably 0.2 to 7 parts by mass per 100 parts by mass of the amount of carboxyl group-containing acrylic rubbers (A). Too small an amount of thiuram compounds and/or N-S bond-containing compounds (B) may provide an insufficient effect, so that good crosslinking properties and good adhesion may not be achieved. On the other hand, too large an amount thereof tends to cause poor dispersion during roll processing and crosslinking inhibition and may also adversely affect the appearance, e.g., due to blooming of the crosslinking accelerator from the resulting crosslinked rubber product.

Here, when the composition contains multiple components (B), the amount means the total amount. The same applies to the amounts of other components.

The tertiary amine and/or guanidine compound (C) is a component that acts as a crosslinking accelerator for the carboxyl group-containing acrylic rubber (A) in the carboxyl group-containing acrylic rubber composition of the present invention.

Specific examples of the tertiary amine (C) include aliphatic tertiary amines, dithiocarbamates, and diazabicycloalkene compounds. Among these, diazabicycloalkene compounds are preferred in terms of normal-state physical properties and heat resistance.

Specific examples of the aliphatic tertiary amines include trimethylamine, triethylamine, tripropylamine, triallylamine, triisopropylamine, tri-n-butylamine, tri-t-butylamine, tri-sec-butylamine, trihexylamine, triheptylamine, trioctylamine, trinonylamine, tridecylamine, triundecylamine, and tridodecylamine.

Specific examples of the dithiocarbamates include zinc dimethyldithiocarbamate, zinc diethyldithiocarbamate, zinc dibutyldithiocarbamate, zinc dipentyldithiocarbamate, zinc dihexyldithiocarbamate, zinc N-pentamethylenedithiocarbamate, zinc N-ethyl-N-phenyldithiocarbamate, zinc dibenzyldithiocarbamate, copper dipropyldithiocarbamate, copper diisopropyldithiocarbamate, copper dibutyldithiocarbamate, sodium diethyldithiocarbamate, sodium diisopropyldithiocarbamate, sodium dibutyldithiocarbamate, ferric dimethyldithiocarbamate, and ferric diethyldithiocarbamate.

Specific examples of the diazabicycloalkene compounds include 1,8-diazabicyclo(5.4.0)undecene-7 (DBU), 1,5-diazabicyclo(4.3.0)nonene-5, and 1,4-diazabicyclo(2.2.2)octane, as well as p-toluenesulfonates, phenolates, phenolic resin salts, orthophthalates, formates, octylates, and naphthoates thereof. Among these, 1,8-diazabicyclo(5.4.0)undecene-7 or naphthoates of 1,8-diazabicyclo(5.4.0)undecene-7 are preferred in terms of normal-state physical properties and heat resistance.

Specific examples of the guanidine compound (C) include 1,3-diphenylguanidine, 1,3-di-o-tolylguanidine, 1-o-tolylbiguanide, di-o-tolylguanidine salt of dicatechol borate, 1,3-di-o-cumenylguanidine, 1,3-di-o-biphenylguanidine, and 1,3-di-o-cumenyl-2-propionylguanidine. Among these, 1,3-di-o-tolylguanidine is preferred in terms of normal-state physical properties, heat resistance, and compression set.

Among these compounds, at least one selected from the group consisting of 1,8-diazabicyclo(5.4.0)undecene-7 and salts thereof and 1,3-di-o-tolylguanidine is preferred from the standpoint of improving adhesion. More preferred is 1,8-diazabicyclo(5.4.0)undecene-7. Moreover, naphthoates are preferred among the salts of 1,8-diazabicyclo(5.4.0)undecene-7.

In the present invention, the tertiary amine and/or guanidine compound (C) which also corresponds to (D) an aliphatic diamine compound and/or aromatic diamine compound as described later is regarded as the component (C).

A single tertiary amine and/or guanidine compound (C) may be used alone or two or more tertiary amines and/or guanidine compounds (C) may be used in combination. The amount of tertiary amines and/or guanidine compounds (C) is preferably 0.1 to 10 parts by mass, more preferably 0.15 to 8 parts by mass, still more preferably 0.2 to 7 parts by mass per 100 parts by mass of the amount of carboxyl group-containing acrylic rubbers (A).

The aliphatic diamine compound and/or aromatic diamine compound (D) is a component that acts as a crosslinking agent for the carboxyl group-containing acrylic rubber (A) in the carboxyl group-containing acrylic rubber composition of the present invention as it can easily form a crosslinked structure with a carboxyl group. The component (D) is preferably an aliphatic diamine compound.

Specific examples of the aliphatic diamine compound (D) include hexamethylenediamine, hexamethylenediamine carbamate, ethylenediamine, ethylenediamine carbamate, 3,3'-diaminopropylamine, and diamino-modified siloxanes. Among these, hexamethylenediamine carbamate is preferred in terms of normal-state physical properties and heat resistance.

Specific examples of the aromatic diamine compound (D) include 4,4'-methylenedianiline, m-phenylenediamine, p-phenylenediamine, p,p'-ethylenedianiline, 4,4'-methylenebis(o-chloroaniline), 4,4'-(m-phenylenediisopropylidene)dianiline, 4,4'-(p-phenylenediisopropylidene)dianiline, 4,4'-diaminodiphenyl ether, 3,4'-diaminodiphenyl ether, bis[4-(4-aminophenoxy)phenyl]ether, 2,2'-bis[4-(4-aminophenoxy)phenyl]propane, 4,4'-diaminobenzanilide, 1,4-bis(4-aminophenoxy)benzene, 1,3-bis(4-aminophenoxy)benzene, 4,4'-bis(4-aminophenoxy)biphenyl, m-xylylenediamine, p-xylylenediamine, 4,4'-diaminodiphenylsulfone, bis[4-(4-aminophenoxy)phenyl]sulfone, bis[4-(3-aminophenoxy)phenyl]sulfone, hexamethylenediamine-cinnamaldehyde adducts, hexamethylenediamine-dibenzoate salts, and N,N'-dicinnamylidene-1,6-hexanediamine. Among these, 2,2-bis[4-(4-aminophenoxy)phenyl]propane is preferred in terms of normal-state physical properties and heat resistance.

The aliphatic diamine compound and/or aromatic diamine compound (D) is preferably hexamethylenediamine carbamate and/or 2,2'-bis[4-(4-aminophenoxy)phenyl]propane, more preferably hexamethylenediamine carbamate. A single aliphatic diamine compound and/or aromatic diamine compound (D) may be used alone, or two or more aliphatic diamine compounds and/or aromatic diamine compounds (D) may be used in combination. The amount of aliphatic diamine compounds and/or aromatic diamine compounds (D) is preferably 0.1 to 6 parts by mass, more preferably 0.15 to 5 parts by mass, still more preferably 0.2 to 4 parts by mass per 100 parts by mass of the amount of carboxyl group-containing acrylic rubbers (A).

The carboxyl group-containing acrylic rubber composition of the present invention may also contain additives usually compounded into general crosslinking rubber compositions according to the purpose or need, as long as the advantageous effect of the present invention is not impaired. Examples of such various additives include fillers, processing aids, plasticizers, acid acceptors, softeners, antioxidants, coloring agents, stabilizers, adhesion promoters, release agents, conductivity imparting agents, thermal conductivity imparting agents, surface detackifiers, tackifiers, flexibility imparting agents, heat resistance improvers, flame retardants, UV absorbers, oil resistance improvers, foaming agents, scorch inhibitors, and lubricants. One of these additives may be used alone, or two or more of these may be used in combination.

The fillers may include known fillers. Specific examples include calcium carbonate, talc, silica, clay, carbon fibers, glass fibers, carbon black, titanium oxide, magnesium oxide, hydrotalcite, magnesium hydroxide, antimony oxide, and zinc oxide. Among these, carbon black and silica are preferred, and carbon black is more preferred. The nitrogen adsorption specific surface area ($N_2SA$) of the carbon black, when present, is preferably 15 to 90 $m^2/g$, more preferably 30 to 85 $m^2/g$, still more preferably 35 to 60 $m^2/g$, from the standpoint of adhesion to a fluororubber composition. Moreover, the average particle size is preferably 15 to 80 nm, more preferably 25 to 60 nm, still more preferably 30 to 50 nm, from the standpoint of adhesion to a fluororubber composition. The amount of fillers, when present, is preferably 1 to 150 parts by mass, more preferably 10 to 100 parts by mass per 100 parts by mass of the amount of carboxyl group-containing acrylic rubbers (A).

Herein, the nitrogen adsorption specific surface area of the carbon black can be determined according to JIS K 6217-2:2001, and the average particle size thereof can be determined, e.g., using a transmission electron microscope.

Examples of the processing aids include higher fatty acids such as stearic acid, oleic acid, palmitic acid, and lauric acid; higher fatty acid salts such as sodium stearate and zinc stearate; higher fatty acid amides such as stearamide and oleamide; higher fatty acid esters such as ethyl oleate; higher aliphatic amines such as stearylamine and oleylamine; petroleum waxes such as carnauba wax and ceresin wax; polyglycols such as ethylene glycol, glycerol, and diethylene glycol; aliphatic hydrocarbons such as vaseline and paraffin; silicone oils; silicone polymers; low molecular weight polyethylenes; phthalates; phosphates; rosins; (halogenated) dialkylamines; (halogenated) dialkyl sulfones; and surfactants. The amount of processing aids, when present, is preferably 0.1 to 10 parts by mass, more preferably 0.5 to 5 parts by mass per 100 parts by mass of the amount of carboxyl group-containing acrylic rubbers (A).

Examples of the plasticizers include phthalic acid derivatives such as dioctyl phthalate (bis(2-ethylhexyl) phthalate) and diallyl phthalate; adipic acid derivatives such as dibutyl diglycol adipate and di(butoxyethoxy)ethyl adipate; sebacic acid derivatives such as dioctyl sebacate; and trimellitic acid derivatives such as trioctyl trimellitate. One of these plasticizers may be used alone, or two or more of these may be used in combination.

Examples of the antioxidants include amines, phosphates, quinolines, cresols, phenols, and dithiocarbamate metal salts. Preferred are amines such as diphenylamine derivatives (e.g., 4,4'-bis($\alpha,\alpha$-dimethylbenzyl)diphenylamine) and phenylenediamine derivatives. The amount of antioxidants, when present, is preferably 0.3 to 10 parts by mass, more preferably 0.5 to 5 parts by mass per 100 parts by mass of the amount of carboxyl group-containing acrylic rubbers (A).

The carboxyl group-containing acrylic rubber composition of the present invention may be compounded using any means conventionally used in the field of polymer processing, such as an open roll mill, a Banbury mixer, or any of various kneaders.

The compounding may be performed by usual procedures employed in the field of polymer processing. For example, the following procedure may be used: only a polymer is first kneaded, then compounding agents other than a crosslinking agent and a crosslinking accelerator are introduced to prepare an A-kneaded compound, and thereafter B-kneading is performed by introducing the crosslinking agent and the crosslinking accelerator.

The thus-obtained carboxyl group-containing acrylic rubber composition of the present invention is excellent in roll processability during processing. When the carboxyl group-containing acrylic rubber composition of the present invention is formed into a sheet (uncrosslinked sheet) having a thickness of about 2 to 2.5 mm, the scorch time t5 at 125°C (JIS K 6300) may be 60 minutes or less, preferably at least 0.5 minutes but not more than 60 minutes, more preferably at least 1 minute but not more than 60 minutes, still more preferably at least 2 minutes but not more than 55 minutes. If the scorch time t5 is too long, the crosslinking rate is so slow that it may take a long time to fully crosslink, so that good crosslinking properties and good adhesion may not be achieved. Here, the scorch time t5 can be adjusted to a desired value by varying the types and amounts of crosslinking agents and crosslinking accelerators.

The carboxyl group-containing acrylic rubber composition of the present invention can be converted into a crosslinked carboxyl group-containing acrylic rubber product by heating usually at 100 to 250°C. Although the crosslinking time depends on the temperature, it is usually 0.5 to 300 minutes.

As a general crosslinking and forming method, crosslinking and forming may be performed in an integrated manner, or a previously formed product of the crosslinkable acrylic rubber composition may be reheated to produce a crosslinked product. Alternatively, a crosslinked acrylic rubber product obtained by previously heating the composition may be processed for forming. The crosslinking and forming may be performed specifically by any method, including compression or injection molding using a mold, and heating using a steam can, an air bath, infrared rays, or microwaves.

As the resulting crosslinked carboxyl group-containing acrylic rubber product is obtained from the carboxyl group-containing acrylic rubber composition of the present invention, it is excellent in roll processability during processing and also exhibits excellent normal-state physical properties, heat resistance, and oil resistance when provided as a crosslinked product.

The laminate of the present invention includes a crosslinked product of the carboxyl group-containing acrylic rubber composition of the present invention and a crosslinked product of a fluororubber composition which are laminated together. The carboxyl group-containing acrylic rubber composition of the present invention and its crosslinked product are as described above. Hereinafter, the fluororubber composition will be described.

The fluororubber in the fluororubber composition is preferably a highly fluorinated elastic copolymer, such as a copolymer of vinylidene fluoride and another copolymerizable fluorine-containing olefin. Specific examples of the fluorine-containing olefin include hexafluoropropene, pentafluoropropene, trifluoroethylene, trifluorochloroethylene, tetrafluoroethylene, vinyl fluoride, perfluoromethyl vinyl ether, and perfluoropropyl vinyl ether. One or two or more of these may be used as copolymer components.

The fluororubber described above may be crosslinked by diamine crosslinking, polyol crosslinking, or peroxide crosslinking, but peroxide crosslinking is preferred in view of the advantageous effect of the present invention.

In the case of peroxide crosslinking, a peroxide crosslinking vulcanizing agent is compounded into the fluororubber composition. Specific examples of the peroxide crosslinking vulcanizing agent include tert-butyl hydroperoxide, p-menthane hydroperoxide, dicumyl peroxide, tert-butyl peroxide, 1,3-bis(tert-butylperoxyisopropyl)benzene, 2,5-dimethyl-2,5-di(tert-butylperoxy) hexane, benzoyl peroxide, and tert-butyl peroxybenzoate.

Although the amount of peroxide crosslinking vulcanizing agents may be determined appropriately according to the purpose of use, it is preferably 0.1 to 5 parts by mass, more preferably 0.2 to 4 parts by mass per 100 parts by mass of the amount of fluororubbers. An amount of less than 0.1 parts by mass may result in insufficient crosslinking. On the other hand, an amount of more than 5 parts by mass may result in a crosslinked product that is too rigid to provide the properties usually expected of a crosslinked fluororubber product.

Moreover, the fluororubber composition used in the laminate of the present invention may be compounded with various known compounding agents usually used in the field of rubber processing together with the peroxide crosslinking vulcanizing agent. Examples of such compounding agents include vulcanization accelerators, metal compounds serving as acid acceptors, light stabilizers, filler, coloring agents, processing aids, plasticizers, lubricants, tackifiers, glidants, flame retardants, antifungal agents, antistatic agents, colorants, silane coupling agents, crosslinking coagents, and crosslinking retarders. The amounts of these compounding agents are not limited as long as the object and advantageous effect of the present invention are not impaired. They can be appropriately compounded in amounts according to the purpose of compounding.

The fillers can be classified into the following two types: adhesion improvers for acrylic rubber compositions, such as magnesium oxide used in Patent Literature 1 described above; and reinforcing agents. Specific examples of the adhesion improvers include, in addition to magnesium oxide, oxides of monovalent or divalent metals (alkali metals or alkaline earth metals) and monovalent or divalent metal salts. More specific examples of the adhesion improvers include metal oxides such as magnesium oxide, zinc oxide, calcium oxide, titanium oxide, and aluminum oxide. Specific examples of the reinforcing agents include inorganic fillers such as carbon black and silica. One of these fillers may be used alone, or two or more of these may be used in combination.

As described above, in Patent Literature 1, magnesium oxide as a filler is incorporated into a peroxide-crosslinkable fluororubber to improve the adhesion and bonding of the resulting laminate. In contrast, the laminate of the present invention in which a crosslinked product of a fluororubber composition and a crosslinked product of the carboxyl group-containing acrylic rubber composition of the present invention having excellent adhesion to the fluororubber composition are laminated together has good adhesion even when the fluororubber composition does not contain an adhesion improver such as magnesium oxide. Thus, preferably, the fluororubber composition does not contain an adhesion improver such as magnesium oxide.

In the fluororubber composition, the amount of magnesium oxide (preferably metal oxides, more preferably adhesion improvers) per 100 parts by mass of the amount of fluororubbers is preferably 15 parts by mass or less, more preferably 10 parts by mass or lese, still more preferably 6 parts by mass or less, particularly preferably 3 parts by mass or less, further preferably 1 part by mass or less, most preferably 0 parts by mass. This tends to result in a laminate having excellent adhesion.

Specific examples of the crosslinking coagents include triallyl isocyanurate, diallyl phthalate, phenylene dimaleimide, benzoylquinone dioxime, and trimethylolpropane trimethacrylate. One of these crosslinking coagents may be used alone, or two or more of these may be used in combination.

The fluororubber composition may be compounded using any means conventionally used in the field of polymer processing, such as an open roll mill, a Banbury mixer, or any of various kneaders.

The compounding may be performed by usual procedures employed in the field of polymer processing. For example, the following procedure may be used: only a polymer is first kneaded, then compounding agents other than a crosslinking agent and a crosslinking accelerator are introduced to prepare an A-kneaded compound, and thereafter B-kneading is performed by introducing the crosslinking agent and the crosslinking accelerator.

A crosslinked product of the fluororubber composition can be produced by heating the fluororubber composition usually at 100 to 200°C. Although the crosslinking time depends on the temperature, it is usually 0.5 to 300 minutes. Crosslinking and forming may be performed by any method, including compression or injection molding using a mold, and heating using an air bath, infrared rays, or microwaves.

To obtain excellent properties, the laminate of the present invention preferably includes the crosslinked product of the fluororubber composition as an inner layer and the crosslinked product of the carboxyl group-containing acrylic rubber composition of the present invention as an outer layer. In order to take advantage of the good adhesion of the carboxyl group-containing acrylic rubber composition of the present invention to the fluororubber composition, preferably, the crosslinked product of the fluororubber composition as an inner layer is at least partially in contact with the crosslinked product of the carboxyl group-containing acrylic rubber composition of the present invention as an outer layer.

The laminate of the present invention exhibits sufficient adhesion even when exposed to harsh conditions (e.g., immersion in fuel oil) because chemically strong adhesion is obtained during crosslinking without requiring any complicated step in the lamination of the crosslinked product of the carboxyl group-containing acrylic rubber composition and the crosslinked product of the fluororubber composition. Moreover, the laminate of the present invention can be easily formed at low cost and also has good formability. Moreover, as the laminate can be formed by an ordinary method such as extrusion, it can also be made thinner and have excellent flexibility as well.

The laminate of the present invention can be suitably used in fuel piping or air piping products including tubes, hoses, etc.

EXAMPLES

Hereinafter, the present invention is described in further detail with reference to examples, but the following examples are not intended to limit the scope of the rights of the present invention. The properties and characteristics were tested and evaluated as follows.

(Scorch time t5)

The carboxyl group-containing acrylic rubber composition was kneaded by a kneader and an open roll mill to prepare an uncrosslinked rubber sheet having a thickness of 2 to 2.5 mm. In accordance with JIS K 6300, Mooney Viscometer AM-3 available from Toyo Seiki Seisaku-sho, Ltd. was used to measure the scorch time t5 (the time from the start of measurement to an increase in Mooney viscosity of five points compared to the minimum Mooney viscosity) at 125°C. A scorch time t5 of 60 minutes or less can result in good crosslinking properties and good adhesion. On the other hand, when the scorch time t5 is longer than 60 minutes, it may take a long time to fully crosslink, so that good crosslinking properties and good adhesion may not be achieved.

(Normal-state physical properties: tensile strength, elongation)

The uncrosslinked rubber sheet of the carboxyl group-containing acrylic rubber composition was pressed at 180°C for 10 minutes, followed by heating in an air oven at 180°C for three hours for secondary crosslinking, whereby a crosslinked carboxyl group-containing acrylic rubber product was obtained. The tensile strength (hereinafter also denoted as TB) and elongation (hereinafter also denoted as EB) of the crosslinked carboxyl group-containing acrylic rubber product were measured in accordance with JIS K 6251.

(Normal-state physical properties: hardness)

The type A durometer hardness (hereinafter also denoted as HS) of the crosslinked carboxyl group-containing acrylic rubber product was measured in accordance with JIS K 6253.

(Heat resistance test)

After the crosslinked carboxyl group-containing acrylic rubber product was subjected to a heat resistance test at 175°C for 168 hours, the tensile strength, elongation, and hardness were measured similarly to the normal-state physical property tests. The rates of change in tensile strength and elongation ($\Delta$TB and $\Delta$EB, respectively, unit: %) before and after the test were calculated from the measurement results. Moreover, the hardness difference ($\Delta$HS, unit: pts) before and after the test was calculated. The equations for the rates of change and the difference are as follows. Lower rates of change and a smaller difference each indicate better heat resistance.

$$\Delta TB = ((\text{Post-test tensile strength} - \text{Pre-test tensile strength})/\text{Pre-test tensile strength}) \times 100$$

$$\Delta EB = ((\text{Post-test elongation} - \text{Pre-test elongation})/\text{Pre-test elongation}) \times 100$$

$$\Delta HS = \text{Post-test hardness} - \text{Pre-test hardness}$$

(Oil resistance test)

The crosslinked carboxyl group-containing acrylic rubber product was heated at 150°C for 72 hours in accordance with JIS K 6258. The test liquid used was a test lubricating oil No. 3 (product name "IRM 903" available from Japan Sun Oil Company, Ltd.) as specified in JIS K 6258. After the test, the test piece was taken out, and the test liquid was wiped off from the test piece. Then, the tensile strength, elongation, and hardness were measured similarly to the normal-state physical property tests. The rates of change in tensile strength and elongation ($\Delta$TB and $\Delta$EB, respectively) before and after the test and the hardness difference ($\Delta$HS) before and after the test were calculated from the measurement results similarly to the heat resistance test. Moreover, in the oil resistance test, the volume and weight of the test piece were also measured to calculate the rate of change in volume $\Delta$V (%) and the rate of change in weight $\Delta$W (%). The equations for $\Delta$V and $\Delta$W are as follows. Lower rates of change $\Delta$V and $\Delta$W each indicate better oil resistance.

$$\Delta V = ((\text{Post-test volume} - \text{Pre-test volume})/\text{Pre-test volume}) \times 100$$

$$\Delta W = ((\text{Post-test weight} - \text{Pre-test weight})/\text{Pre-test weight}) \times 100$$

(Preparation of fluororubber composition)

A peroxide-crosslinkable fluororubber (DAI-EL G-8002 available from Daikin Industries, Ltd.) (100 parts by mass), carbon black N990 (20 parts by mass), and triallyl isocyanurate (4 parts by mass) were kneaded by a kneader. Further, 2,5-dimethyl-2,5-di(tert-butylperoxy)hexane (PERHEXA 25B available from NOF Corporation) (1.5 parts by mass) was added and kneaded by an open roll mill, whereby a fluororubber composition was prepared.

(Production of laminate)

An uncrosslinked rubber sheet of the carboxyl group-containing acrylic rubber composition having a thickness of 2 to 2.5 mm and an uncrosslinked rubber sheet of the fluororubber composition having a thickness of 1.5 to 2 mm were prepared. These uncrosslinked rubber sheets were attached and laminated together and subjected to primary crosslinking at 170°C under a pressure of 25 to 30 kg/cm$^2$ for 20 minutes and then to secondary crosslinking in an air oven at 180°C for three hours. Thus, a laminate was obtained. The laminate had a thickness of 3.5 to 4.5 mm.

(Peel test)

The laminate obtained above was cut into a strip having a size of 1.0 × 8.0 cm to prepare a test piece for adhesive testing. Using an Autograph AGS-X available from Shimadzu Corporation, the test piece was peeled at a tensile rate of 50 mm/min at 25°C, and the average of the peel strengths measured at from 0 to 80 mm was calculated. Moreover, when material failure occurred during the measurement, the measurement was stopped at that point, and the average of the peel strengths measured thus far was calculated. Each test was repeated three times, and the median peel strength was determined and used for evaluation.

Example 1

A carboxyl group-containing acrylic rubber (RACRESTER CT available from Osaka Soda Co., Ltd.) (100 parts by mass), carbon black N550 (60 parts by mass), stearic acid (2 parts by mass), and 4,4'-bis($\alpha,\alpha$-dimethylbenzyl)diphenylamine (NOCRAC CD available from Ouchi Shinko Chemical Industrial Co., Ltd.) (2 parts by mass) were kneaded at 120°C by a kneader. Further, tetramethylthiuram disulfide (Nocceler TT available from Ouchi Shinko Chemical Industrial Co., Ltd.) (1 part by mass), a mixture of 1,8-diazabicyclo(5.4.0)undecene-7 (DBU), a crosslinking retarder, and a binder resin (Rhenogran XLA-60; DBU content: 60% by mass; Rhein Chemie) (2 parts by mass), and hexamethylenediamine carbamate (Sanfel 6-MC available from Sanshin Chemical Industry Co., Ltd.) (0.6 parts by mass) were kneaded by an open roll mill at room temperature. Thus, a carboxyl group-containing acrylic rubber composition was prepared.
The normal-state physical properties (tensile strength, elongation, and hardness), heat resistance, oil resistance, and peel strength of the carboxyl group-containing acrylic rubber composition were tested and evaluated by the methods described above. Table 1 shows the results.

Examples 2 to 4 and Comparative Example 1

A carboxyl group-containing acrylic rubber composition was prepared as in Example 1, except that the formulation was changed as shown in Table 1. The composition was tested and evaluated as in Example 1. Table 1 shows the results.

Examples 5 to 7 and Comparative Example 2

A carboxyl group-containing acrylic rubber composition was prepared as in Example 1, except that the formulation was changed as shown in Table 2. The composition was tested and evaluated as in Example 1. Table 2 shows the results.

Example 8

RACRESTER CT (100 parts by mass), carbon black N550 (60 parts by mass), stearic acid (2 parts by mass), NOCRAC CD (2 parts by mass), and 2,2-bis[4-(4-aminophenoxy)phenyl]propane (BAPP available from Wakayama Seika Kogyo Co., Ltd.) (1.2 parts by mass) were kneaded at 120°C by a kneader. Further, Nocceler TT (1 part by mass) and Rhenogran XLA-60 (2 parts by mass) were kneaded by an open roll mill at room temperature. Thus, a carboxyl group-containing acrylic rubber composition was prepared.
The normal-state physical properties (tensile strength, elongation, and hardness), heat resistance, oil resistance, and peel strength of the thus-obtained carboxyl group-containing acrylic rubber compositions were tested and evaluated by the methods described above. Table 3 shows the results.

Comparative Example 3

A carboxyl group-containing acrylic rubber composition was prepared as in Example 8, except that the formulation was changed as shown in Table 3. The composition was tested and evaluated as in Example 8. Table 3 shows the results.

Example 9

RACRESTER CT (100 parts by mass), carbon black N550 (60 parts by mass), stearic acid (2 parts by mass), and NOCRAC CD (2 parts by mass) were kneaded at 120°C by a kneader. Further, Nocceler TRA (0.5 parts by mass), Rhenogran XLA-60 (2 parts by mass), and Sanfel 6-MC (0.6 parts by mass) were kneaded by an open roll mill at room temperature. Thus, a carboxyl group-containing acrylic rubber composition was prepared.

The normal-state physical properties (tensile strength, elongation, and hardness), oil resistance (only ΔV and ΔW), and peel strength of the thus-obtained carboxyl group-containing acrylic rubber compositions were tested and evaluated by the methods described above. Here, since the amount of the component (B) that acts as an adhesive to a fluororubber composition is different between Example 9 and Example 3, these examples were evaluated mainly for peel strength, and additionally, the normal-state physical properties (tensile strength, elongation, and hardness) and oil resistance (only ΔV and ΔW) were also evaluated. On the other hand, since the same formulation system was used in Example 9 and Example 3, the heat resistance and oil resistance (other than ΔV and ΔW) were not evaluated. Table 4 shows the results.

Examples 10 and 11

A carboxyl group-containing acrylic rubber composition was prepared as in Example 9, except that the formulation was changed as shown in Table 4. The composition was tested and evaluated as in Example 9. Table 4 shows the results.

[Table 1]

| | | Example 1 | Example 2 | Example 3 | Example 4 | Comparative Example 1 |
|---|---|---|---|---|---|---|
| (A) | RACRESTER CT *1 | 100 | 100 | 100 | 100 | 100 |
| | Carbon black N550 | 60 | 60 | 60 | 60 | 60 |
| | Stearic acid | 2 | 2 | 2 | 2 | 2 |
| | NOCRAC CD *2 | 2 | 2 | 2 | 2 | 2 |
| (B) | Nocceler TT *3 | 1 | | | | |
| | Nocceler TET *4 | | 1 | | | |
| | Nocceler TRA *5 | | | 1 | | |
| | VULNOC R *6 | | | | 2 | |
| (C) | Rhenogran XLA-60 *7 | 2 | 2 | 2 | 2 | 2 |
| | P-152 *8 | | | | | |
| | DA-500 *9 | | | | | |
| | Nocceler DT *10 | | | | | |
| | DABCO *11 | | | | | |
| (D) | Sanfel 6-MC *12 | 0.6 | 0.6 | 0.6 | 0.6 | 0.6 |
| | BAPP *13 | | | | | |
| Scorch time t5 (min) | | 21.5 | 10.8 | 10.1 | 9.8 | 6.0 |
| Normal-state physical properties | TB (Mpa) | 10 | 10 | 10 | 10 | 11 |
| | EB (%) | 300 | 337 | 289 | 413 | 249 |
| | HS (JISA) | 62 | 61 | 66 | 65 | 66 |

(continued)

|  |  | Example 1 | Example 2 | Example 3 | Example 4 | Comparative Example 1 |
|---|---|---|---|---|---|---|
| Heat resistance test | ∆TB (%) | -26 | -27 | -22 | -17 | -25 |
|  | ∆EB (%) | -4 | 0 | 5 | -18 | 10 |
|  | ∆HS (pts.) | 10 | 12 | 9 | 11 | 8 |
| Oil resistance test | ∆V (%) | 14 | 14 | 13 | 13 | 14 |
|  | ∆W (%) | 10 | 10 | 9 | 9 | 10 |
|  | ∆TB (%) | -3 | -4 | -9 | 2 | -4 |
|  | ∆EB (%) | -1 | 0 | 9 | -2 | -6 |
|  | ∆HS (pts.) | -5 | -7 | -9 | -10 | -7 |
| Peel test | Peel strength (kN/m) | 2.0 | 1.8 | 3.0 | 2.0 | 1.0 |

[Table 2]

|  |  | Example 1 | Example 5 | Example 6 | Example 7 | Comparative Example 2 |
|---|---|---|---|---|---|---|
| (A) | RACRESTER CT *1 | 100 | 100 | 100 | 100 | 100 |
|  | Carbon black N550 | 60 | 60 | 60 | 60 | 60 |
|  | Stearic acid | 2 | 2 | 2 | 2 | 2 |
|  | NOCRAC CD *2 | 2 | 2 | 2 | 2 | 2 |
| (B) | Nocceler TT *3 | 1 | 1 | 1 | 1 | 1 |
|  | Nocceler TET *4 |  |  |  |  |  |
|  | Nocceler TRA *5 |  |  |  |  |  |
|  | VULNOC R *6 |  |  |  |  |  |
| (C) | Rhenogran XLA-60 *7 | 2 |  |  |  |  |
|  | P-152 *8 |  | 2.5 |  |  |  |
|  | DA-500 *9 |  |  | 2 |  |  |
|  | Nocceler DT *10 |  |  |  | 1 |  |
|  | DABCO *11 |  |  |  |  |  |
| (D) | Sanfel 6-MC *12 | 0.6 | 0.6 | 0.6 | 0.6 | 0.6 |
|  | BAPP *13 |  |  |  |  |  |
| Scorch time t5 (min) |  | 21.5 | 33.3 | 20.9 | 50.1 | 36.8 |
| Normal-state physical properties | TB (Mpa) | 10 | 11 | 10 | 10 | 9 |
|  | EB (%) | 300 | 214 | 278 | 311 | 365 |
|  | HS (JISA) | 62 | 79 | 72 | 64 | 60 |

(continued)

|  |  | Example 1 | Example 5 | Example 6 | Example 7 | Comparative Example 2 |
|---|---|---|---|---|---|---|
| Heat resistance test | ΔTB (%) | -26 | -13 | -12 | -35 | -53 |
|  | ΔEB (%) | -4 | -7 | -5 | 15 | 7 |
|  | ΔHS (pts.) | 10 | 8 | 8 | 8 | 4 |
| Oil resistance test | ΔV (%) | 14 | 13 | 12 | 13 | 14 |
|  | ΔW (%) | 10 | 9 | 9 | 9 | 10 |
|  | ΔTB (%) | -3 | -2 | -2 | -4 | 3 |
|  | ΔEB (%) | -1 | -8 | -12 | 2 | -12 |
|  | ΔHS (pts.) | -5 | -6 | -4 | -10 | -7 |
| Peel test | Peel strength (kN/m) | 2.0 | 1.7 | 1.6 | 1.9 | 1.4 |

[Table 3]

|  |  | Example 1 | Example 8 | Comparative Example 3 |
|---|---|---|---|---|
| (A) | RACRESTER CT *1 | 100 | 100 | 100 |
|  | Carbon black N550 | 60 | 60 | 60 |
|  | Stearic acid | 2 | 2 | 2 |
|  | NOCRAC CD *2 | 2 | 2 | 2 |
| (B) | Nocceler TT *3 | 1 | 1 | 1 |
|  | Nocceler TET *4 |  |  |  |
|  | Nocceler TRA *5 |  |  |  |
|  | VULNOC R *6 |  |  |  |
| (C) | Rhenogran XLA-60 *7 | 2 | 2 |  |
|  | P-152 *8 |  |  |  |
|  | DA-500 *9 |  |  |  |
|  | Nocceler DT *10 |  |  |  |
|  | DABCO *11 |  |  | 1 |
| (D) | Sanfel6-MC *12 | 0.6 |  |  |
|  | BAPP *13 |  | 1.2 | 1.2 |
| Scorch time t5 (min) |  | 21.5 | 47.7 | >65 |
| Normal-state physical properties | TB (Mpa) | 10 | 11 | 11 |
|  | EB (%) | 300 | 274 | 214 |
|  | HS (JISA) | 62 | 67 | 69 |
| Heat resistance test | ΔTB (%) | -26 | -23 | -19 |
|  | ΔEB (%) | -4 | -12 | 28 |
|  | ΔHS (pts.) | 10 | 9 | 0 |

(continued)

|  |  | Example 1 | Example 8 | Comparative Example 3 |
|---|---|---|---|---|
| Oil resistance test | ΔV (%) | 14 | 13 | 12 |
|  | ΔW (%) | 10 | 9 | 9 |
|  | ΔTB (%) | -3 | -11 | 0 |
|  | ΔEB (%) | -1 | -16 | 6 |
|  | ΔHS (pts.) | -5 | -9 | -9 |
| Peel test | Peel strength (kN/m) | 2.0 | 1.7 | 1.4 |

[Table 4]

|  |  | Example 9 | Example 10 | Example 11 |
|---|---|---|---|---|
| (A) | RACRESTER CT *1 | 100 | 100 | 100 |
|  | Carbon black N550 | 60 |  |  |
|  | Carbon black N330 |  | 60 |  |
|  | Carbon black N774 |  |  | 60 |
|  | Stearic acid | 2 | 2 | 2 |
|  | NOCRAC CD *2 | 2 | 2 | 2 |
| (B) | Nocceler TT *3 |  |  |  |
|  | Nocceler TET *4 |  |  |  |
|  | Nocceler TRA *5 | 0.5 | 0.5 | 0.5 |
|  | VULNOC R *6 |  |  |  |
| (C) | Rhenogran XLA-60 *7 | 2 | 2 | 2 |
|  | P-152 *8 |  |  |  |
|  | DA-500 *9 |  |  |  |
|  | Nocceler DT *10 |  |  |  |
|  | DABCO *11 |  |  |  |
| (D) | Sanfel 6-MC *12 | 0.6 | 0.6 | 0.6 |
|  | BAPP *13 |  |  |  |
| Scorch time t5 (min) |  | 7.2 | 5.8 | 8.2 |
| Normal-state physical properties | TB (Mpa) | 12.2 | 14.2 | 10.6 |
|  | EB (%) | 272 | 286 | 308 |
|  | HS (JISA) | 70 | 72 | 61 |
| Oil resistance test | ΔV (%) | 13 | 12 | 11 |
|  | ΔW (%) | 9 | 8 | 8 |
| Peel test | Peel strength (kN/m) | 3.2 | 2.3 | 2.6 |

*1: Carboxyl group-containing acrylic rubber (Osaka Soda Co., Ltd.; glass transition temperature: -26°C; Mooney viscosity (ML1+4, 100°C): 39)
*2: 4,4'-Bis($\alpha$,$\alpha$-dimethylbenzyl)diphenylamine (Ouchi Shinko Chemical Industrial Co., Ltd.)

*3: Tetramethylthiuram disulfide (Ouchi Shinko Chemical Industrial Co., Ltd.)

*4: Tetraethylthiuram disulfide (Ouchi Shinko Chemical Industrial Co., Ltd.)

*5: Dipentamethylenethiuram tetrasulfide (Ouchi Shinko Chemical Industrial Co., Ltd.)

*6: 4,4'-Dithiodimorpholine (Ouchi Shinko Chemical Industrial Co., Ltd.)

*7: Mixture of DBU (content: 60% by mass), crosslinking retarder, and binder resin (Rhein Chemie)

*8: DBU (Osaka Soda Co., Ltd.)

*9: Naphthoate of DBU (Osaka Soda Co., Ltd.)

*10: 1,3-Di-o-tolylguanidine (Ouchi Shinko Chemical Industrial Co., Ltd.)

*11: 1,4-Diazabicyclo[2.2.2]octane (Tokyo Chemical Industry Co., Ltd.)

*12: Hexamethylenediamine carbamate (Sanshin Chemical Industry Co., Ltd.)

*13: 2,2-Bis[4-(4-aminophenoxy)phenyl]propane (Wakayama Seika Kogyo Co., Ltd.)

Carbon black N550: nitrogen adsorption specific surface area ($N_2SA$): 41 $m^2/g$; average particle size: 43 nm (Tokai Carbon Co., Ltd., product name: SEAST SO)

Carbon black N330: nitrogen adsorption specific surface area ($N_2SA$): 79 $m^2/g$; average particle size: 28 nm (Tokai Carbon Co., Ltd., product name: SEAST 3)

Carbon black N774: nitrogen adsorption specific surface area ($N_2SA$): 27 $m^2/g$; average particle size: 66 nm (Tokai Carbon Co., Ltd., product name: SEAST S)

As shown in Examples 1 to 8 in Tables 1 to 3, the results of the normal-state physical property tests, heat resistance test, and oil resistance test of the crosslinked carboxyl group-containing acrylic rubber products of the present invention maintain properties comparable to those of Comparative Examples 1 to 3, demonstrating strong adhesion to the peroxide-crosslinkable fluororubber in terms of peel strength.

Comparisons between Examples 1 to 4 and Comparative Example 1 and comparisons between Examples 1 and 5 to 7 and Comparative Example 2 demonstrated that the adhesion to the fluororubber composition was improved by satisfying the constituent features of the present invention, without incorporating adhesion improvers and the like such as magnesium oxide into the fluororubber composition. Moreover, a comparison between Example 1 and Example 8 demonstrated that the adhesion to the peroxide-crosslinkable fluororubber remained unchanged when the crosslinking agent was changed. In contrast, Comparative Example 3 simulating Patent Literature 1 (Example 13) failed to provide adhesion to the peroxide-crosslinkable fluororubber as the scorch time t5 was too long (65 minutes or more). This suggested that the use of a carboxyl group-containing acrylic rubber composition having a scorch time t5 of 60 minutes or less provides strong adhesion to a peroxide-crosslinkable fluororubber.

INDUSTRIAL APPLICABILITY

The carboxyl group-containing acrylic rubber composition of the present invention is excellent in heat resistance and oil resistance. Further, the laminate of the present invention including a crosslinked product of the carboxyl group-containing acrylic rubber composition of the present invention and a crosslinked product of a fluororubber composition which are laminated together has excellent peel strength and is industrially useful. Taking advantage of the above characteristics, the laminate of the present invention can be suitably used as a hose or tube for fuel piping or air piping.

**Claims**

1.  A carboxyl group-containing acrylic rubber composition, comprising:

    (A) at least one carboxyl group-containing acrylic rubber;
    (B) at least one thiuram compound and/or N-S bond-containing compound;
    (C) at least one tertiary amine and/or guanidine compound; and
    (D) at least one aliphatic diamine compound and/or aromatic diamine compound,

    wherein the composition has a scorch time t5 at 125°C of 60 minutes or less.

2.  The carboxyl group-containing acrylic rubber composition according to claim 1,
    wherein the N-S bond-containing compound (B) is 4,4'-dithiodimorpholine.

3.  The carboxyl group-containing acrylic rubber composition according to claim 1 or 2,
    wherein an amount of the component (B) is 0.1 to 10 parts by mass per 100 parts by mass of the component (A).

4. The carboxyl group-containing acrylic rubber composition according to any one of claims 1 to 3,
wherein the tertiary amine and/or guanidine compound (C) is at least one selected from the group consisting of 1,8-diazabicyclo(5.4.0)undecene-7 and salts thereof and 1,3-di-o-tolylguanidine.

5. The carboxyl group-containing acrylic rubber composition according to any one of claims 1 to 4,
wherein an amount of the component (C) is 0.1 to 10 parts by mass per 100 parts by mass of the component (A).

6. The carboxyl group-containing acrylic rubber composition according to any one of claims 1 to 5,
wherein the aliphatic diamine compound and/or aromatic diamine compound (D) is hexamethylenediamine carbamate and/or 2,2-bis[4-(4-aminophenoxy)phenyl]propane.

7. The carboxyl group-containing acrylic rubber composition according to any one of claims 1 to 6,
wherein an amount of the component (D) is 0.1 to 6 parts by mass per 100 parts by mass of the component (A).

8. A laminate, comprising
a crosslinked product of the carboxyl group-containing acrylic rubber composition as defined in any one of claims 1 to 7 and a crosslinked product of a fluororubber composition which are laminated together.

9. A tube or hose, comprising
the laminate as defined in claim 8.

10. A fuel piping or air piping product, comprising
the tube or hose as defined in claim 9.

## INTERNATIONAL SEARCH REPORT

International application No.

**PCT/JP2021/035350**

### A. CLASSIFICATION OF SUBJECT MATTER

***B32B 25/14***(2006.01)i; ***C08K 5/17***(2006.01)i; ***C08K 5/205***(2006.01)i; ***C08K 5/31***(2006.01)i; ***C08K 5/3442***(2006.01)i; ***C08K 5/40***(2006.01)i; ***C08K 5/43***(2006.01)i; ***C08L 33/04***(2006.01)i; ***F16L 11/04***(2006.01)i
FI: C08L33/04; B32B25/14; C08K5/43; C08K5/40; C08K5/17; C08K5/31; C08K5/3442; C08K5/205; F16L11/04

According to International Patent Classification (IPC) or to both national classification and IPC

### B. FIELDS SEARCHED

Minimum documentation searched (classification system followed by classification symbols)

B32B25/14; C08K5/17; C08K5/205; C08K5/31; C08K5/3442; C08K5/40; C08K5/43; C08L33/04; F16L11/04

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2008-189733 A (DENKI KAGAKU KOGYO KK) 21 August 2008 (2008-08-21) claims, paragraphs [0035], [0036], example 1 | 1-10 |
| Y | JP 9-286050 A (UNION CARBIDE CHEMICALS & PLASTICS TECHNOLOGY CORP.) 04 November 1997 (1997-11-04) paragraph [0024] | 1-10 |
| Y | JP 2014-152311 A (BRIDGESTONE CORP.) 25 August 2014 (2014-08-25) paragraph [0024] | 1-10 |
| Y | JP 8-59896 A (YOKOHAMA RUBBER CO., LTD.) 05 March 1996 (1996-03-05) paragraph [0016] | 1-10 |
| Y | JP 2001-49063 A (TOKAI RUBBER INDUSTRIES, LTD.) 20 February 2001 (2001-02-20) paragraphs [0022], [0023] | 1-10 |
| Y | WO 2014/073489 A1 (UNIMATEC CO., LTD.) 15 May 2014 (2014-05-15) claims, example 1 | 1-10 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 November 2021** | **16 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2021/035350**

| Patent document cited in search report | | | Publication date (day/month/year) | Patent family member(s) | | | Publication date (day/month/year) |
|---|---|---|---|---|---|---|---|
| JP | 2008-189733 | A | 21 August 2008 | (Family: none) | | | |
| JP | 9-286050 | A | 04 November 1997 | EP page 5, lines 35-46 KR 10-1997-0027218 | 775718 | A2 A | |
| JP | 2014-152311 | A | 25 August 2014 | US paragraph [0025] WO CN | 2015/0368448 2014/126015 104995249 | A1 A1 A | |
| JP | 8-59896 | A | 05 March 1996 | (Family: none) | | | |
| JP | 2001-49063 | A | 20 February 2001 | US page 3, right column (second row), lines 55-63 EP | 6534578 1074777 | B1 A1 | |
| WO | 2014/073489 | A1 | 15 May 2014 | US claims, example 1 CN KR 10-2015-0084020 | 2015/0298434 104768751 | A1 A A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018110701 A

**Non-patent literature cited in the description**

- **KATSUSADA TOKUHIRA.** Formulation of Fluoroelastomer. *Journal of The Society of Rubber Industry, Japan,* 2000, vol. 73 (6), 298-306